(19) Europäisches Patentamt
European Patent Office
Office européen des brevets

(11) **EP 4 527 804 A1**

(12) **EUROPEAN PATENT APPLICATION**
published in accordance with Art. 153(4) EPC

(43) Date of publication:
**26.03.2025 Bulletin 2025/13**

(21) Application number: **23865779.5**

(22) Date of filing: **05.09.2023**

(51) International Patent Classification (IPC):
*C01G 53/00* (2025.01)    *H01M 4/525* (2010.01)
*H01M 4/02* (2006.01)

(52) Cooperative Patent Classification (CPC):
**C01G 53/00; H01M 4/02; H01M 4/525;** Y02E 60/10

(86) International application number:
**PCT/KR2023/013247**

(87) International publication number:
**WO 2024/058481 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 KR 20220116495**

(71) Applicant: **LG Chem, Ltd.**
**Yeongdeungpo-gu**
**Seoul 07336 (KR)**

(72) Inventors:
• **KIM, Woo Hyun**
  **Daejeon 34122 (KR)**
• **NOH, Joon Ho**
  **Daejeon 34122 (KR)**
• **KIM, Seong Bae**
  **Daejeon 34122 (KR)**
• **MOON, Chang Jun**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR PREPARING CATHODE ACTIVE MATERIAL PRECURSOR**

(57)    The objective of the present invention is to provide a method for reproducibly preparing a cathode active material precursor with narrow particle distribution.

[FIG. 1]

EP 4 527 804 A1

**Description**

**TECHNICAL FIELD**

Cross-reference to Related Applications

This application claims the benefit of Korean Patent Application No. 10-2022-0116495, filed on September 15, 2022, in the Korean Intellectual Property Office, the disclosure of which is incorporated herein in its entirety by reference.

Technical Field

The present invention relates to a method for preparing a positive electrode active material precursor.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt oxide, such as $LiCoO_2$, having a high operating voltage and excellent capacity characteristics has been mainly used. However, since the $LiCoO_2$ has very poor thermal properties due to an unstable crystal structure caused by delithiation and is expensive, there is a limitation in using a large amount of the $LiCoO_2$ as a power source for applications such as electric vehicles.

Lithium manganese oxides ($LiMnO_2$ or $LiMn_2O_4$), lithium iron phosphate compounds ($LiFePO_4$, etc.), or lithium nickel oxides ($LiNiO_2$, etc.) have been developed as materials for replacing the $LiCoO_2$. Among these materials, research and development on the lithium nickel oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery.

Accordingly, as a method for improving low thermal stability while maintaining the excellent reversible capacity of the $LiNiO_2$, $LiNi_{1-\alpha}Co_\alpha O_2$ ($\alpha$=0.1 to 0.3), in which a portion of nickel is substituted with cobalt, or a nickel cobalt manganese-based lithium composite metal oxide, in which a portion of nickel is substituted with Mn and Co (hereinafter, "NCM-based lithium oxide"), has been developed. In addition, a lithium transition metal oxide having a concentration gradient of a metal composition has been proposed in order to solve a limitation of stability caused by elution of metal elements while having excellent output characteristics.

Examples of the method for preparing the positive electrode active material include a method for preparing a positive electrode active material by preparing a positive electrode active material precursor using a continuous stirring tank reactor (CSTR) and then sintering the positive electrode active material precursor with a lithium raw material, and a method for preparing a positive electrode active material by preparing a positive electrode active material precursor using a batch reactor and then sintering the positive electrode active material precursor with a lithium raw material. The continuous stirring tank reactor discharges a precursor composed of particles simultaneously while raw materials are added and co-precipitated, and, with respect to the batch reactor, raw materials are added according to a volume of the reactor and reacted for a predetermined time, and a precursor is discharged after the completion of the reaction.

In general, the positive electrode active material precursor prepared by using the continuous stirring tank reactor can improve the productivity of the positive electrode active material precursor by introducing raw materials, coprecipitating the raw materials, and simultaneously discharging the precursor, but since the introduction of the raw materials and the discharge of the product are continuously performed at the same time, there may be a deviation in the residence time and the reaction time of the positive electrode active material precursors generated in the reactor, and thus there is a limitation in that the size and particle size distribution of the positive electrode active material precursor particles generated are non-uniform.

In addition, the positive electrode active material precursor prepared using the batch reactor has uniform particle size and particle size distribution, but when the precursor is prepared using the batch reactor, the precursor seed formation step and the precursor particle growth step are simultaneously performed in the reactor, and thus it is difficult to reproduce or predict the same particle size distribution and average particle size for each reaction. In addition, during mass-production through the batch reactor, there is difficulty in terms of facilities because the larger the reactor, the faster the rotation of the stirrer is. The probability of the quality dispersion of seeds due to the application of incomplete facilities is high, thereby causing an issue in terms of quality reproducibility and ultimately causing limitations in product quality.

[PRIOR ART DOCUMENT]

[PATENT DOCUMENT]

(Patent Document 1) Korean Patent Application Laid-open Publication No. 2012-0049227

## DISCLOSURE OF THE INVENTION

### TECHNICAL PROBLEM

An aspect of the present invention provides a method for preparing a positive electrode active material precursor having a narrow particle size distribution in a reproducible manner.

### TECHNICAL SOLUTION

According to an aspect of the present invention, there is provided a method for preparing a positive electrode active material precursor using a reaction device in which a reactor and a continuous grinder are connected, the method including the steps of: (S1) introducing a reaction solution including a transition metal-containing solution, an ammonium ion-containing solution, and a basic aqueous solution into the reactor to form and discharge a positive electrode active material precursor seed; and (S2) introducing the positive electrode active material precursor seed discharged from the reactor into the continuous grinder, and discharging and re-introducing the positive electrode active material precursor seed into the reactor, wherein the steps (S1) and (S2) are carried out simultaneously.

### ADVANTAGEOUS EFFECTS

According to the present invention, the positive electrode active material precursor can be prepared to have a uniform size and narrow particle size distribution.

### BRIEF DESCRIPTION OF THE DRAWINGS

FIG. 1 is a schematic view illustrating a reaction device used in the present invention.
FIG. 2 shows an SEM image of Example 1.
FIG. 3 shows an SEM image of Comparative Example 1.
FIG. 4 shows an SEM image of Comparative Example 2.

### MODE FOR CARRYING OUT THE INVENTION

Hereinafter, the present invention will be described in more detail to aid in understanding the present invention.
Terms or words used in the specification and claims should not be interpreted as being limited to a conventional or dictionary meaning, and should be interpreted as the meaning and concept that accord with the technical spirit on the grounds of the principle that the inventor can appropriately define the concept of the term in order to explain invention in the best way.
In the present specification, $D_5$, $D_{50}$ and $D_{95}$ may be defined as particle diameters corresponding to 5%, 50%, and 95% of the cumulative volume, respectively, in the particle size distribution curve of particles (graph curve of particle size distribution). The $D_5$, $D_{50}$, and $D_{95}$, for example, may be measured by using a laser diffraction method. The laser diffraction method may generally measure a particle diameter ranging from several nanometers to several millimeters, and may obtain highly reproducible and high resolution results. In the present specification, the average particle diameter means the $D_{50}$.
A method for preparing a positive electrode active material precursor of the present invention uses a reaction device in which a reactor and a continuous grinder are connected, the method including the steps of: (S1) introducing a reaction solution including a transition metal-containing solution, an ammonium ion-containing solution, and a basic aqueous solution into the reactor to form and discharge a positive electrode active material precursor seed; and (S2) introducing the positive electrode active material precursor seed discharged from the reactor into the continuous grinder, then discharging and re-introducing the positive electrode active material precursor seed into the reactor, wherein steps (S1) and (S2) above are carried out simultaneously.
Hereinafter, the present invention will be explained in detail.

Step (S1)

In step (S1), a reaction solution including a transition metal-containing solution, an ammonium ion-containing solution, and a basic aqueous solution is introduced into a reactor to form and discharge a positive electrode active material precursor seed.

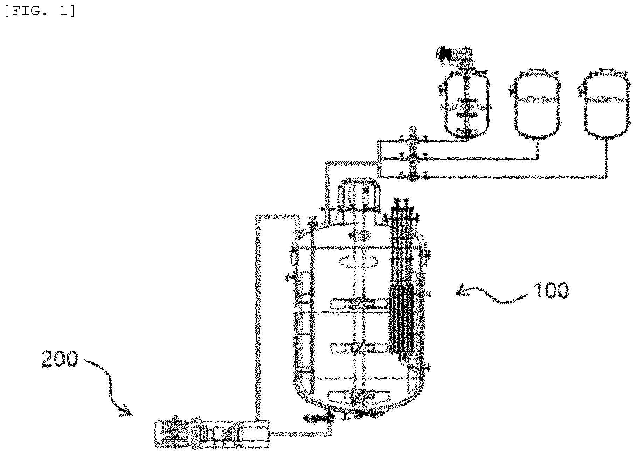

FIG. 1 is a view schematically illustrating a reaction device which can be used in the method for preparing a positive electrode active material precursor according to an embodiment of the present invention. Referring to FIG. 1, the preparation method of the present invention uses the reaction device in which a reactor 100 and a continuous grinder 200 are connected.

In step (S1), the reaction solution including the transition metal-containing solution, the ammonium ion-containing solution, and the basic aqueous solution is introduced into the reactor 100, and a positive electrode active material precursor seed is formed in the reactor 100.

The reactor 100 may be used regardless of the type of reactor, such as a batch reactor, a continuous stirring tank reactor (CSTR), and a continuous filtered tank reactor (CFTR). More specifically, the reactor, for example, a continuous filtered tank reactor (CFTR), in which a filtration device is provided inside the reactor, may be used.

The positive electrode active material precursor seed formed in step (S1) may mean a seed formed by aggregating nuclei of positive electrode active material precursor particles in a primary particle form, wherein the nuclei of positive electrode active material precursor particles in a primary particle form are generated when a co-precipitation reaction is started by introducing a transition metal aqueous solution, ammonium cations, and a basic aqueous solution. As will be described later, after passing through the continuous grinder and then being introduced back into the reactor, the seeds may be aggregated to form a core of the positive electrode active material precursor.

The transition metal-containing solution may include cations of one or more metals selected from nickel (Ni), manganese (Mn), cobalt (Co), tungsten (W), molybdenum (Mo), chromium (Cr), and aluminum (Al). The transition metal-containing solution may include acetates, nitrates, sulfates, halides, sulfides, hydroxides, oxides, or oxyhydroxides of the above transition metals, and these materials are not particularly limited as long as they may be dissolved in water.

For example, the cobalt (Co) may be included as $Co(OH)_2$, CoOOH, $Co(OCOCH_3)_2 \cdot 4H_2O$, $Co(NO_3)_2 \cdot 6H_2O$, or $Co(SO_4)_2 \cdot 7H_2O$, and any one thereof or a mixture of two or more thereof may be used. Also, the nickel (Ni) may be included as $Ni(OH)_2$, NiO, NiOOH, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, or a nickel halide, and any one thereof or a mixture of two or more thereof may be used. Furthermore, the manganese (Mn) may be included as a manganese oxide such as $Mn_2O_3$, $MnO_2$, and $Mn_3O_4$; a manganese salt such as $MnCO_3$, $Mn(NO_3)_2$, $MnSO_4$, manganese acetate, manganese dicarboxylate, manganese citrate, and a fatty acid manganese salt; an oxyhydroxide, and manganese chloride, and any one thereof or a mixture of two or more thereof may be used.

Meanwhile, when the finally prepared precursor further includes a second metal element (M) other than nickel (Ni), manganese (Mn), cobalt (Co), tungsten (W), molybdenum (Mo), chromium (Cr), and aluminum (Al) (for example, M is one or more elements selected from among Zr, Ti, Mg, Ta, and Nb), the second metallic element-containing raw material may be optionally added when preparing the metal ion-containing solution. The second metallic element-containing raw material may include acetates, nitrates, sulfates, halides, sulfides, hydroxides, oxides, or oxyhydroxides containing the second metallic element, and one thereof or a mixture of two or more thereof may be used. For example, when the second metallic element is Zr, zirconium oxide or the like may be used.

The ammonium ion-containing solution may include at least one selected from among $NH_4OH$, $(NH_4)_2SO_4$, $NH_4NO_3$, $NH_4Cl$, $CH_3COONH_4$, and $NH_4CO_3$. Water or a mixture of water and an organic solvent (specifically, alcohol etc.), which may be uniformly mixed with the water, may be used as a solvent.

The basic aqueous solution may include at least one selected from among a hydrate of an alkali metal, a hydroxide of an alkali metal, a hydrate of an alkali earth metal, and a hydroxide of an alkali earth metal. For example, the basic aqueous solution may include NaOH, KOH, $Ca(OH)_2$, or the like, and water or a mixture of water and an organic solvent (specifically, alcohol, or the like) that may be uniformly mixed with water may be used as the solvent.

The content of the ammonium ion-containing solution may be 4 parts by weight to 100 parts by weight, preferably 4 parts by weight to 30 parts by weight, based on 100 parts by weight of the transition metal-containing solution.

Meanwhile, step (S1) may be performed under a pH of 10.5 to 12.5, and the basic aqueous solution may be used to adjust the pH of the reaction solution, and in the step of forming the positive electrode active material precursor seed, the basic aqueous solution may be used to maintain the pH of the reaction solution to be 10.5 to 12.5, preferably 11 to 12. When the content of the ammonium ion-containing solution introduced in step (S1) is within the above range, or when the pH of the reaction solution is within the above range, it may be advantageous to adjust the size of the seed.

Step (S1) may be performed under a temperature condition of 10 °C to 80 °C, and specifically, may be performed under a temperature condition of 40 °C to 60 °C. When the temperature condition is within the above range, the metal ions may be sufficiently dissolved while preventing the volatilization of the introduced solutions, and thus the positive electrode active material precursor seed may be properly formed.

Step (S2)

The positive electrode active material precursor seed discharged from the reactor is introduced into the continuous grinder and then discharged and re-introduced into the reactor. Here, the positive electrode active material precursor seed re-introduced into the reactor after passing through the continuous grinder through step (S2) may grow into positive electrode active material precursor particles in the reactor.

In the present invention, the rate at which the positive electrode active material precursor seed is discharged from the reactor 100 of step (S1) and introduced into the continuous grinder 200 of step (S2) may be at least [reactor 100 capacity (L)×6]/[hr], and specifically at least [reactor 100 capacity (L)×8]/[hr], at least [reactor 100 capacity (L)×10]/[hr], and at least [reactor 100 capacity (L)×12]/[hr] .

Within the above range, the positive electrode active material precursor seed is transferred from the reactor 100 to the continuous grinder 200 at an appropriate rate and amount, so that the effect of grinding the seed to a small size and uniformly adjusting the particle size may be sufficiently exhibited.

The positive electrode active material precursor seed formed in step (S1) is not concentrated in the reactor 100 but is ground in the continuous grinder 200 through step (S2) and then re-introduced into the reactor 100.

If the reaction solution is introduced into the reactor and then continuously reacted, particle aggregation occurs, and this tends to occur severely until the reaction progress rate in the reactor reaches 30%. In the present invention, before the reaction significantly proceeds in the reactor 100 and particle aggregation occurs, the positive electrode active material precursor seed is introduced into the continuous grinder and is split into small sizes to suppress the aggregation and uniformly control particle size.

Therefore, in the present invention, the positive electrode active material precursor seed re-introduced into the reactor 100 through the above process has narrow and uniform particle size distribution characteristics. As a result, the particle size is small and the contact area of the seed is large, and thus the efficiency of generation of the positive electrode active material precursor may not only be increased, but also the positive electrode active material precursor having a uniform particle size may be provided ultimately.

Unlike the present invention, when a positive electrode active material precursor is prepared by using a device without a continuous grinder, a plurality of particles far from a spherical shape, for example, particles having a shape such as a roly-poly toy, are found in a final positive electrode active material precursor, and these should be removed in order to improve sphericity of the precursor, and are cause of a decrease in the electrode density of the positive electrode in a secondary battery.

The roly-poly toy-shaped particles are generated by the growth of the seed in a state in which the seed is attached to another seed due to the low stirring force at the beginning of the precursor preparation reaction, and in order to solve this, it is necessary to increase the stirring force of the reactor or to keep the introduction rate of the raw material low. However, increasing the stirring force of the reactor has a clear limit of facility depending on the scale of the reactor.

The continuous grinder 200 used in the present invention may compensate for the low stirring force of the reactor, and in this case, it is not necessary to reduce the rate of introducing the raw material into the reactor. The continuous grinder 200 may serve not only to suppress a phenomenon in which the seed is attached to another seed but also to continuously separate the seeds already attached. Through this, it is possible to prepare a positive electrode active material precursor having low values of $D_{90}$ and $D_{95}$.

In the present invention, step (S2) may be carried out for 0.5 hours to 24 hours, specifically for 2 hours or more, 4 hours or more, 20 hours or less, 16 hours or less, or 10 hours or less. During the above time, the positive electrode active material precursor seed is introduced into and discharged from the continuous grinder 200 and then re-introduced into the reactor 100, so that it may be advantageous to uniformly adjust the particle size of the positive electrode active material precursor seed.

In step (S1), the continuous grinder 200 may have a rotation speed of 500 rpm to 4,500 rpm, preferably 3,000 rpm to 3,500 rpm.

Since the rpm depends on the characteristics of the machine, the rpm cannot be absolute, but the size of the seed may be adjusted through the rpm adjustment. The average particle diameter ($D_{50}$) of the positive electrode active material precursor seed may be adjusted to 1.0 $\mu$m to 5.0 $\mu$m through the rpm adjustment.

Specifically, in the present invention, the average particle diameter ($D_{50}$) of the positive electrode active material precursor seed discharged from the continuous grinder 200 may be 1.0 $\mu$m to 5.0 $\mu$m, or 1.3 $\mu$m to 3.0 $\mu$m.

When the rotation speed of the continuous grinder 200 is within the above range, or when the size of the seed is within the above range, the particle size of the formed positive electrode active material precursor seed may be uniform, and accordingly, there may appear the advantages that the positive electrode active material precursor having a narrow particle size distribution may be produced in a reproducible manner, and the particle sphericity and uniformity may be improved.

In the present invention, steps (S1) and (S2) above are performed simultaneously. That is, the reaction solution is introduced into the reactor 100 to form the positive electrode active material precursor seed, and at the same time, some of the positive electrode active material precursor seeds are discharged from the reactor 100, and then are ground and discharged from the continuous grinder 200 and re-introduced into the reactor 100. These are continuously performed at the same time, so that it may be suppressed that the positive electrode active material precursor seeds are concentrated in the reactor 100, and thus the particles grow.

Step (S3)

After step (S2), the method may further include a step of (S3) stopping the operation of the continuous grinder and growing the positive electrode active material precursor particles in the reactor.

This is a step of preparing the positive electrode active material precursor using the positive electrode active material precursor seed of the uniform particle size obtained in the reactor 100 through steps (S1) and (S2), in order to prevent the positive electrode active material precursor from being continuously discharged and ground to the continuous grinder 200, the operation of the continuous grinder 200 is stopped after steps (S1) and (S2) are sufficiently performed, and the positive electrode active material precursor particles are allowed to grow.

The reaction of step (S3) may be performed under a temperature condition of 10 °C to 80 °C, for example, at 50 °C. When the temperature condition is within the above range, metal ions may be sufficiently dissolved while preventing the volatilization of the introduced solutions, and thus the positive electrode active material precursor having a narrow and uniform particle distribution may be formed.

The positive electrode active material precursor of the present invention prepared according to step (S3) may have a span value of 2.5 or less, specifically 1.5 or less, or 1.0 or less. That is, according to the present invention, the positive electrode active material precursor having a uniform particle size may be prepared.

In addition, the present invention provides a method for preparing a positive electrode active material, the method including mixing the positive electrode active material precursor prepared as described above with a lithium-containing raw material and then sintering the mixture.

As the lithium-containing raw material, for example, lithium carbonate ($Li_2CO_3$) or lithium hydroxide (LiOH) may be used, and the positive electrode active material precursor and the lithium-containing raw material may be mixed in a molar ratio of 1:1 to 1:1.15. When the molar ratio of the positive electrode active material precursor and the lithium-containing raw material is within the above range, the capacity of the positive electrode active material may be excellent, and the separation of the positive electrode active material particles may not occur.

The sintering may be performed at a temperature of 700 °C to 1,000 °C. In the case where the sintering temperature is within the above range, the raw materials do not remain in the particles, and thus high-temperature stability of the battery may be improved and the volume density and crystallinity are excellent, and thus the structural stability may be excellent. In addition, the volume capacity of the battery may be excellent. Meanwhile, in consideration of the particle size control of the prepared positive electrode active material, capacity, stability and a reduction in lithium-containing by-products, the sintering temperature may be more preferably in a range of 750 °C to 850 °C.

The sintering may be performed for 5 hours to 35 hours. When the sintering time is within the above range, the positive electrode active material having high crystallinity may be obtained, the particle size may be appropriate, and the production efficiency may be excellent.

In addition, the present invention may provide a positive electrode including the positive electrode active material prepared as described above, and a lithium secondary battery.

Specifically, the positive electrode includes a positive electrode current collector and a positive electrode active material layer which is disposed on the positive electrode current collector and includes the positive electrode active material.

In the positive electrode, the positive electrode current collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness of 3 $\mu$m to 500 $\mu$m, and microscopic irregularities may be formed on the surface of the positive electrode current collector to improve the adhesion of the positive electrode active material. The positive electrode current collector, for example, may be used in various shapes such as a film, a sheet, a foil, a net, a porous body, a foam body, and a non-woven fabric body.

Also, the positive electrode active material layer may include a conductive agent and a binder in addition to the above-described positive electrode active material.

In this case, the conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt% based on a total weight of the positive electrode active material layer.

Furthermore, the binder improves the adhesion between the positive electrode active material particles and the adhesion between the positive electrode active material and the current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt% based on the total weight of the positive electrode active material layer.

The positive electrode may be prepared according to a typical method for preparing a positive electrode except that the above-described positive electrode active material is used. Specifically, a composition for forming a positive electrode active material layer, which includes the above-described positive electrode active material as well as selectively the binder and the conductive agent, is coated on the positive electrode current collector, and the positive electrode may then be prepared by drying and rolling the coated positive electrode current collector. In this case, types and amounts of the positive electrode active material, the binder, and the conductive agent are the same as those previously described.

The solvent may be a solvent normally used in the art. The solvent may include dimethyl sulfoxide (DMSO), isopropyl alcohol, *N*-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, the positive electrode may be prepared by casting the composition for forming a positive electrode active material layer on a separate support and then laminating a film separated from the support on the positive electrode current collector.

The present invention may also provide an electrochemical device including the positive electrode. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 $\mu$m to 500 $\mu$m, and, similar to the positive electrode current collector, microscopic irregularities may be formed on the surface of the current collector to improve the adhesion of the negative electrode active material. The negative electrode current collector, for example, may be used in various shapes such as a film, a sheet, a foil, a net, a porous body, a foam body, and a non-woven fabric body.

The negative electrode active material layer selectively includes a binder and a conductive agent in addition to the negative electrode active material. The negative electrode active material layer may be prepared by coating a composition for forming a negative electrode in the form of a slurry, which includes selectively the binder and the conductive agent as well as the negative electrode active material, on the negative electrode current collector and drying the coated negative electrode current collector, or may be prepared by casting the composition for forming a negative electrode on a separate support and then laminating a film separated from the support on the negative electrode current collector.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as $SiO\beta$ $(0 < \beta < 2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used to secure heat resistance or mechanical strength, and the separator having a single-layered or multi-layered structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used as the lithium salt. It is preferable to use the lithium salt in a concentration range of 0.1 M to 2.0 M. When the concentration of the lithium salt is in the above range, the electrolyte may have suitable conductivity and viscosity, thereby exhibiting excellent performance, and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, *N*-substituted oxazolidinone, *N,N*-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Accordingly, the present invention may provide a battery module including the lithium secondary battery as a unit cell, and a battery pack including the battery module.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

**Examples**

Hereinafter, the present invention will be described in more detail according to the examples. However, the following examples are intended to illustrate the present invention, and the scope of the present invention is not limited thereto.

**Example 1**

$NiSO_4$, $CoSO_4$, and $MnSO_4$ were added to distilled water in an amount such that a molar ratio of Ni:Co:Mn was (88.5): (3.5): (8.0) to prepare a 2.4 M solution. In addition, an 8.0 M NaOH aqueous solution and a 5.1 M $NH_4OH$ aqueous solution were prepared.

As shown in FIG. 1, a container containing the transition metal-containing solution and a container in which 25 wt% of NaOH aqueous solution and 9 wt% of $NH_4OH$ aqueous solution were prepared were each connected to a 100-L reactor.

After 28.6L of deionized water, 0.035 mol/L of the NaOH aqueous solution, and 0.22 mol/L of the $NH_4OH$ aqueous solution were introduced to the reactor, nitrogen gas was purged into the reactor to remove dissolved oxygen in water, and the inside of the reactor was formed into a non-oxidizing atmosphere.

Thereafter, a metal solution was introduced to the reactor at a rate of 7.26 L/hr, the NaOH aqueous solution at a rate of 4.39 L/hr, and the $NH_4OH$ aqueous solution at a rate of 1.03 L/hr, respectively, and the reaction mixture was precipitated at a pH of 12.5 or lower for 10 minutes to form particle seeds of nickel-cobalt-manganese hydroxide. At the same time, the particle seeds formed in the reactor were transferred to a continuous grinder at a rate of 1,000 L/hr ([reactor capacity×10]/[hr]) to maintain the growth reaction of the particles, but the process of suppressing or disintegrating the aggregation between the particles and transferring the reactant to the 100-L reactor again was performed for 8 hours. Subsequently, when the 100-L reactor became full, a filtration system located in the reactor was operated to continuously discharge the solvent, which had completed the reaction, to the outside of the reactor, and a transition metal-containing solution, a NaOH aqueous solution, and an $NH_4OH$ aqueous solution were continuously introduced to maintain the reaction for 32 hours. In this case, the pH was controlled by introducing NaOH in a pH sensor-connected method while sequentially decreasing the stirring speed, and the metal solution was introduced at a rate of 7.26 L/hr, the NaOH aqueous solution at a rate of 4.39 L/hr, and the $NH_4OH$ aqueous solution at a rate of 1.03 L/hr and the mixture was subjected to co-precipitation while maintaining the introduction rate to prepare a precursor including nickel-cobalt-manganese composite metal hydroxide particles.

The molar ratio of Ni:Co:Mn of the positive electrode active material precursor particles in total was 88.5:3.5:8, and the particle diameter thereof was 3.5 $\mu$m.

**Comparative Example 1**

A nickel-cobalt-manganese composite metal hydroxide precursor was prepared using a continuous stirring tank reactor (CSTR).

$NiSO_4$, $CoSO_4$, and $MnSO_4$ were mixed in water in an amount such that a molar ratio of nickel:cobalt:manganese was (88.5): (3.5): (8.0) to prepare a 2.4 M transition metal-containing solution. The metal solution was introduced into the continuous stirring tank reactor at a rate of 7.26 L/hr, the NaOH aqueous solution was introduced at a rate of 4.39 L/hr, and the $NH_4OH$ aqueous solution was introduced at a rate of 1.03 L/hr. The temperature of the reactor was set to 50 °C and stirring was performed at a rate of 350 rpm to precipitate nickel-cobalt-manganese composite metal hydroxide. The resulting nickel-cobalt-manganese composite metal hydroxide particles were separated, washed with water, and dried in an oven at 120 °C to secure a precursor.

**Comparative Example 2**

A nickel-cobalt-manganese composite metal hydroxide precursor was prepared in the same manner as in Example 1, except that the step of transferring the particle seed to the continuous grinder at a rate of 1,000 L/hr ([reactor capacity×10]/[hr]) was not performed.

**Experimental Example 1: SEM Observation**

The positive electrode active material precursors prepared in Example 1, Comparative Example 1, and Comparative Example 2 were photographed with a scanning electron microscope to confirm particle characteristics of the precursors.

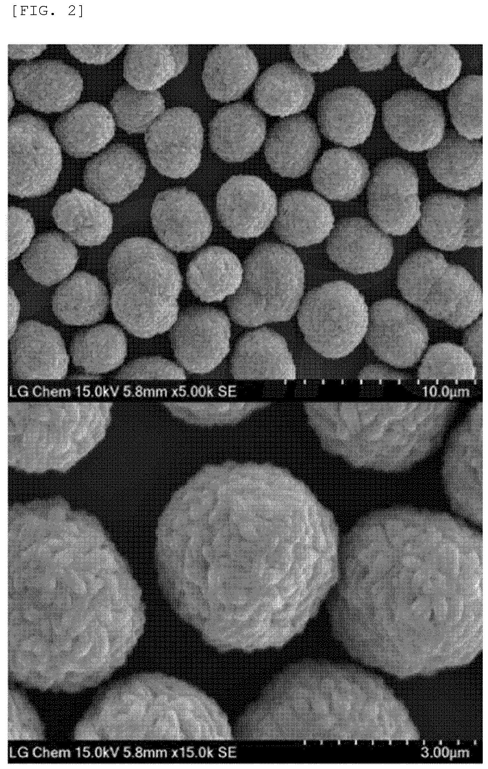

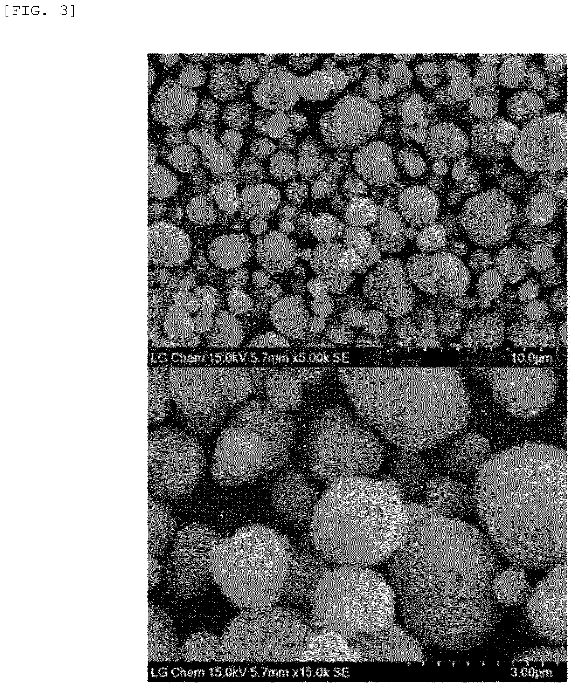

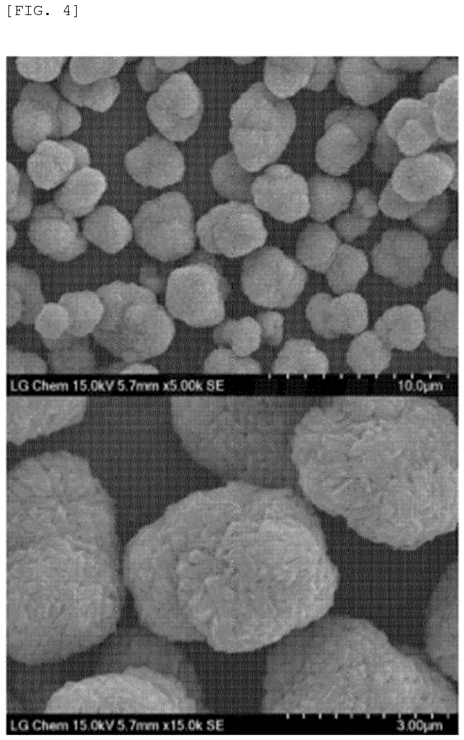

FIG. 2 is an SEM image of Example 1, FIG. 3 is an SEM image of Comparative Example 1, and FIG. 4 is an SEM image of Comparative Example 2. As shown in FIG. 2, it may be confirmed that the precursor particles formed by the continuous grinder of Example 1 to suppress or disintegrate the aggregation of the particle nuclei have a spherical particle shape and the particle size is relatively uniform.

On the other hand, as shown in FIG. 3, it may be confirmed that the precursor prepared using the continuous reactor as in Comparative Example 1 has a mixture of particles having a large particle size and a small particle size. This is because when a continuous process is used as in Comparative Example 1, the input and discharge of reaction raw materials occur simultaneously, and thus the size and size distribution of the resulting precursor particles due to the deviation of the residence time and the reaction time of the reaction raw materials are not uniform.

Meanwhile, as shown in FIG. 4, in the case of the precursor particles prepared by the continuous concentration process in which the solid content is constantly increased depending on the reaction time as in Comparative Example 2, it may be seen that the solid content and the particle growth are constantly maintained, and accordingly, the size of the precursor particles is relatively uniformly formed but the sphericity is reduced.

**Experimental Example 2: Span Value**

Using a particle size analyzer (S3500, Microtrac), $D_5$, $D_{50}$, and $D_{95}$ of the positive electrode active material precursors formed in Examples and Comparative Examples were measured, and the span values of the positive electrode active material precursors were calculated according to Equation 1 below, and the results are shown in Table 1.

$$[\text{Equation 1}]$$

$$\text{Span} = (D_{95} - D_5) / D_{50}$$

[Table 1]

| 1 | $D_5$ (μm) | $D_{50}$ (μm) | $D_{95}$ (μm) | Span |
|---|---|---|---|---|
| Example 1 | 1.94 | 3.38 | 5.19 | 0.96 |
| Comparative Example 1 | 0.59 | 3.56 | 6.27 | 1.60 |
| Comparative Example 2 | 0.76 | 3.45 | 5.68 | 1.43 |

As shown in the above results, in Example 1 prepared according to the present invention, it was confirmed that the aggregation between the seed particles was suppressed, and thus $D_{95}$ was low, and the span value was also lower than those of Comparative Examples.

[Description of Symbols]

100: Reactor

200: Continuous grinder

**Claims**

**1.** A method for preparing a positive electrode active material precursor using a reaction device in which a reactor and a continuous grinder are connected, the method comprising the steps of:

(S1) introducing a reaction solution comprising a transition metal-containing solution, an ammonium ion-containing solution, and a basic aqueous solution into the reactor to form and discharge a positive electrode active material precursor seed; and

(S2) introducing the positive electrode active material precursor seed discharged from the reactor into the continuous grinder, then discharging and re-introducing the positive electrode active material precursor seed into the reactor,

wherein steps (S1) and (S2) above are carried out simultaneously.

2. The method of claim 1, further comprising, after step (S2), a step of (S3) stopping the operation of the continuous grinder and growing the positive electrode active material precursor particles in the reactor.

3. The method of claim 1, wherein step (S2) above is carried out for 0.5 hours to 24 hours.

4. The method of claim 1, wherein the continuous grinder has a rotation speed of 500 rpm to 4,500 rpm.

5. The method of claim 1, wherein the transition metal-containing solution comprises cations of one or more metals selected from among nickel, manganese, cobalt, tungsten, molybdenum, chromium, and aluminum.

6. The method of claim 1, wherein the ammonium ion-containing solution comprises at least one selected from among $NH_4OH$, $(NH_4)_2SO_4$, $NH_4NO_3$, $NH_4Cl$, $CH_3COONH_4$, and $NH_4CO_3$.

7. The method of claim 1, wherein the basic aqueous solution comprises at least one selected from among a hydrate of an alkali metal, a hydroxide of an alkali metal, a hydrate of an alkali earth metal, and a hydroxide of an alkali earth metal.

8. The method of claim 1, wherein the positive electrode active material precursor has a span value of 2.5 or less according to Equation 1 below:

$$[\text{Equation 1}]$$

$$\text{Span} = (D_{95} - D_5) / D_{50}$$

[FIG. 1]

[FIG. 2]

[FIG. 3]

[FIG. 4]

## INTERNATIONAL SEARCH REPORT

| International application No. |
|---|
| **PCT/KR2023/013247** |

### A. CLASSIFICATION OF SUBJECT MATTER

**C01G 53/00**(2006.01)i; **H01M 4/525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

C01G 53/00(2006.01); C01B 33/20(2006.01); H01M 4/04(2006.01); H01M 4/48(2010.01); H01M 4/50(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 전구체(positive electrode active material precursor), 반응기 (reactor), 분쇄기(grinder), 재투입(reinjection)

### C. DOCUMENTS CONSIDERED TO BE RELEVANT

| Category* | Citation of document, with indication, where appropriate, of the relevant passages | Relevant to claim No. |
|---|---|---|
| A | KR 10-0759751 B1 (ECOPRO CO., LTD.) 04 October 2007 (2007-10-04)<br>See claim 4; and paragraph [0024]. | 1-8 |
| A | JP 5714708 B2 (LAMINAR CO., LTD.) 07 May 2015 (2015-05-07)<br>See entire document. | 1-8 |
| A | JP 2014-229567 A (JGC CATALYSTS & AMP CHEMICALS LTD.) 08 December 2014 (2014-12-08)<br>See entire document. | 1-8 |
| A | CN 112582605 A (WANHUA CHEMICAL (SICHUAN) CO., LTD.) 30 March 2021 (2021-03-30)<br>See entire document. | 1-8 |
| A | JP 2016-177984 A (FURUKAWA ELECTRIC CO., LTD.) 06 October 2016 (2016-10-06)<br>See entire document. | 1-8 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2023** | **08 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/013247** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| DA | KR 10-2012-0049227 A (NIPPON CHEMICAL INDUSTRIAL CO., LTD.) 16 May 2012 (2012-05-16) See entire document. | | 1-8 |

Form PCT/ISA/210 (second sheet) (July 2022)

**INTERNATIONAL SEARCH REPORT**
Information on patent family members

International application No.

**PCT/KR2023/013247**

| Patent document cited in search report | | | Publication date (day/month/year) | Patent family member(s) | | | Publication date (day/month/year) |
|---|---|---|---|---|---|---|---|
| KR | 10-0759751 | B1 | 04 October 2007 | WO | 2007-129812 | A1 | 15 November 2007 |
| JP | 5714708 | B2 | 07 May 2015 | EP | 2735366 | A1 | 28 May 2014 |
| | | | | EP | 2735366 | B1 | 11 September 2019 |
| | | | | JP | 2013-539176 | A | 17 October 2013 |
| | | | | KR | 10-1092337 | B1 | 09 December 2011 |
| | | | | US | 10010851 | B2 | 03 July 2018 |
| | | | | US | 2014-0147338 | A1 | 29 May 2014 |
| | | | | WO | 2013-012147 | A1 | 24 January 2013 |
| JP | 2014-229567 | A | 08 December 2014 | | None | | |
| CN | 112582605 | A | 30 March 2021 | CN | 112582605 | B | 04 November 2022 |
| JP | 2016-177984 | A | 06 October 2016 | | None | | |
| KR | 10-2012-0049227 | A | 16 May 2012 | CN | 102498597 | A | 13 June 2012 |
| | | | | JP | 2011-023121 | A | 03 February 2011 |
| | | | | JP | 5490458 | B2 | 14 May 2014 |
| | | | | WO | 2011-007751 | A1 | 20 January 2011 |

Form PCT/ISA/210 (patent family annex) (July 2022)

**EP 4 527 804 A1**

### Patent documents cited in the description

- KR 1020220116495
- KR 20120049227